# FASCICULE DE BREVET EUROPEEN

(11) **EP 3 846 321 B1**
(45) Date de publication et mention de la délivrance du brevet: **03.01.2024**
(21) Numéro de dépôt: 20212108.3
(22) Date de dépôt: 07.12.2020
(51) Int. Cl.: H02K 5/20, H02K 9/22, H02K 11/33

(54) **DISPOSITIF DE REFROIDISSEMENT ET MOTO-VARIATEUR**
KÜHLVORRICHTUNG UND MOTORWECHSELRICHTER
COOLING DEVICE AND MOTOR INVERTER

(30) Priorité: 31.12.2019 FR 1915680
(43) Date de publication de la demande: 07.07.2021
(73) Titulaire: THALES, 92400 Courbevoie (FR)
(72) Inventeur: ABDESSELAM, Francis, 78400 CHATOU (FR)
(74) Mandataire: Atout PI Laplace

(56) Documents cités:
- DE-A1-102006 035 697
- DE-A1-102012 218 444
- DE-A1-102015 214 053
- US-A1- 2019 181 717

## Description

Le domaine de l'invention est celui des moto-variateurs. Un moto-variateur comprend une machine électrique tournante apte à fonctionner dans un mode moteur dans laquelle elle transforme une énergie électrique en énergie mécanique et entraîne ainsi un arbre en rotation, et un variateur électronique de vitesse comprenant des composants de puissance et permettant de faire varier un signal électrique d'alimentation de la machine électrique tournant fonctionnant en mode moteur de sorte à faire varier une vitesse de rotation du moteur et/ou un couple délivré par le moteur.

L'invention s'applique notamment aux moto-variateurs aptes à démarrer un turbomoteur d'un aéronef.

L'invention se rapporte plus particulièrement au refroidissement des moto-variateurs. En effet, les parties actives de la machine électrique tournante (rotor et stator) ainsi que les composants électroniques de puissance du variateur électronique de vitesse génèrent de la chaleur qu'il est nécessaire de dissiper pour éviter un dysfonctionnement de ces éléments et de façon plus globale, du moto-variateur.

Habituellement, la machine électrique tournante et le variateur de vitesse forment des sous-ensembles distincts destinés à être reliés électriquement. Chacun de ces sous-ensembles est équipé d'un dispositif de refroidissement liquide dédié. Ce type de moto-variateur présente une masse élevée. Or, dans le domaine aéronautique, le gain de masse est un problème fondamental.

Il existe également des moto-variateurs dont la machine électrique tournante et le variateur de vitesse sont refroidis par un même dispositif de refroidissement à air comprenant une hélice liée à la rotation du moteur. Toutefois, le refroidissement à air présente des performances limitées.

Les documents US 2019/0181717 A1 et DE102015214053 A1 divulguent des systèmes de refroidissement pour refroidir simultanément un module de puissance et le stator d'un moteur électrique.

Un but de l'invention est de limiter au moins un des inconvénients précités.

A cet effet, l'invention a pour objet une structure de refroidissement conforme à la revendication 1.

D'autres caractéristiques, détails et avantages de l'invention ressortiront à la lecture de la description faite en référence aux dessins annexés donnés à titre d'exemple et qui représentent, respectivement :
[Fig.1] la figure 1 est un schéma fonctionnel d'un moto-variateur selon l'invention,
[Fig.2] la figure 2 représente schématiquement, en vue éclatée, les éléments d'un exemple de moto-variateur selon l'invention, nécessaires à la compréhension de l'invention, ce moto-variateur comprenant une structure de refroidissement selon un premier mode de réalisation de l'invention,
[Fig.3] la figure 3 est une vue de côté du moto-variateur de la figure 2,
[Fig.4] la figure 4 est une vue de face du moto-variateur de la figure 2,
[Fig.5] la figure 5 est une représentation schématique en coupe de la structure de refroidissement selon un premier mode de réalisation décrit à titre d'exemple non-revendiqué, selon un plan de coupe A-A visible en figure 4, parallèle à une face plane d'une deuxième surface de contact de la structure de refroidissement et passant par un deuxième canal de refroidissement de la structure de refroidissement,
[Fig.6] la figure 6 est une vue de face d'une structure de refroidissement selon un deuxième mode de réalisation qui correspond à l'invention,
[Fig.7] la figure 7 est une vue de face d'une structure de refroidissement selon un troisième mode de réalisation décrit à titre d'exemple non-revendiqué,
[Fig.8] la figure 8 est une représentation schématique d'un exemple de boucles de refroidissement d'un moto-variateur comprenant une structure de refroidissement.

D'une figure à l'autre, les mêmes éléments sont repérés par les mêmes références.

L'invention concerne un moto-variateur MV et une structure de refroidissement d'un tel moto-variateur.

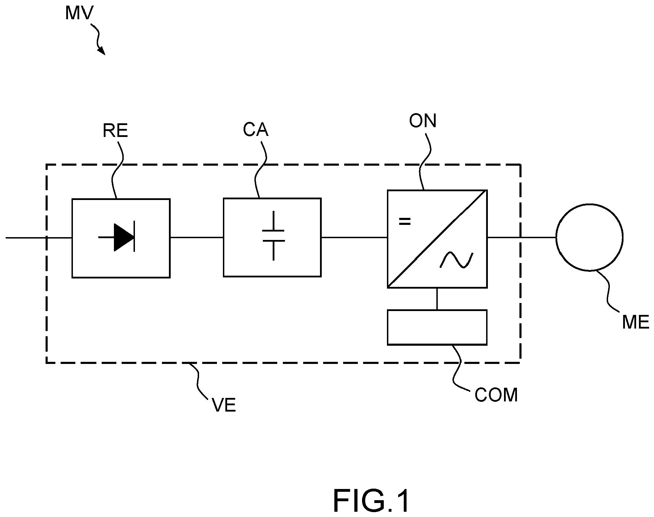

Un schéma fonctionnel d'un exemple non limitatif de moto-variateur est représenté en figure 1.

L'invention concerne, notamment, les moto-variateurs MV qui sont des générateurs démarreurs de turbines d'avions. Ces moto-variateurs MV sont aptes à fonctionner en tant que moteur pour assurer le démarrage d'un turbomoteur d'un avion et, en tant que générateur pour alimenter électriquement un réseau électrique.

Le moto-variateur MV comprend un moteur électrique ou machine électrique tournante ME et un variateur électronique de vitesse VE permettant de faire varier un signal alternatif ou continu d'alimentation de la machine électrique de sorte à faire varier une vitesse de rotation de la machine électrique lorsque cette dernière fonctionne en moteur et/ou de sorte à faire varier un couple fourni par la machine électrique lorsque cette dernière fonctionne en moteur.

Le variateur électronique de vitesse VE représenté en figure 1 est destiné à faire varier une tension alternative d'alimentation de la machine électrique ME. Il comprend un redresseur RE comprenant, par exemple, un pont de diodes. Le variateur électronique de vitesse comprend une capacité de lissage CA (dans le cas d'un variateur en source de tension). Cette capacité de lissage peut être remplacée par une bobine de lissage (dans le cas d'un variateur en source de courant). Le variateur électronique de vitesse comprend également un onduleur ON permettant de délivrer un courant alternatif à partir d'un courant continu délivré en sortie de la capacité de lissage (ou, en variante, de la bobine de lissage). L'onduleur comprend des interrupteurs commandables. Le variateur VE comprend également un module de commande COM permettant de commander les interrupteurs commandables.

Le variateur ne comprend pas de redresseur RE lorsqu'il est alimenté par une tension continue.

Le variateur VE comprend un ensemble de composants électroniques de puissance dont des interrupteurs commandables de l'onduleur ON.

Par composant électronique de puissance, on entend un composant susceptible d'être traversé par des courants alternatifs ou continus de plusieurs dizaines d'ampères sans être détérioré.

Le variateur de vitesse VE comprend, par exemple, des transistors bipolaires à grille isolée ou IGBTs (acronyme de l'expression anglo-saxonne "Insulated Gate Bipolar Transistors") et/ou des transistors MOS (acronyme de l'expression "Metal Oxyde Silicium").

Le variateur de vitesse VE peut, en outre, comprendre des diodes à semiconducteurs réalisées, par exemple, à base de silicium ou de carbure de silicium.

Le variateur électronique de vitesse VE comprend un ensemble de modules de puissance comprenant chacun un ensemble d'au moins un composant de puissance pris parmi les composants de puissance du variateur électronique de vitesse.

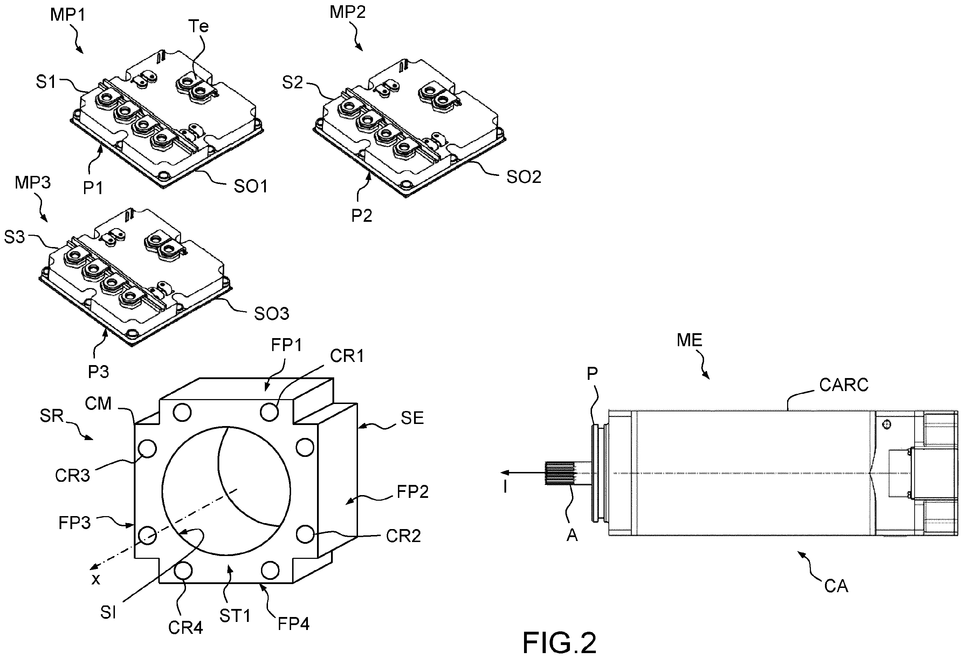

La figure 2 représente schématiquement, en vue éclatée, les principaux éléments nécessaires à la compréhension de l'invention, d'un moto-variateur MV selon l'invention, à savoir, une structure de refroidissement SR selon un premier mode de réalisation décrit à titre d'exemple non-revendiqué, une machine électrique tournante ME et des modules de puissance MP1, MP2, MP3 du variateur électronique de vitesse VE du moto-variateur MV. Chaque moto-variateur comprend un ensemble de composants de puissance pris parmi les composants de puissance du variateur électronique de vitesse VE.

Le moto-variateur MV comprend une machine électrique ME qui est destinée à faire tourner un arbre moteur A autour d'un axe de rotation I.

La structure de refroidissement SR selon l'invention comprend un corps métallique massif CM.

Le corps métallique massif CM présente une forme globalement tubulaire formée autour d'un axe x.

Le corps métallique massif CM est délimité radialement par une première surface de contact SI entourant complètement, radialement, l'axe x et par une deuxième surface de contact SE entourant complètement, radialement, la première surface de contact SI.

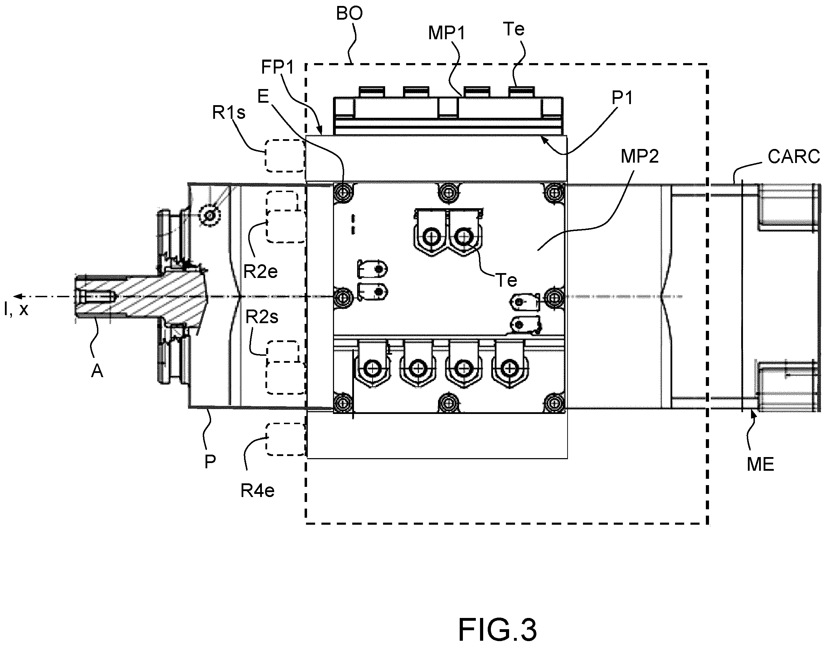

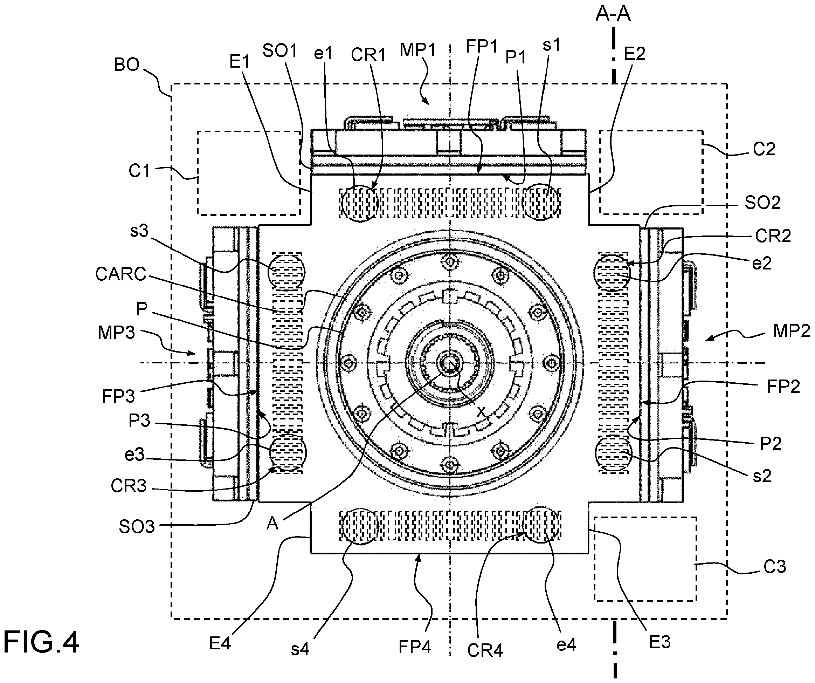

La deuxième surface de contact SE est destinée à être en contact physique avec les modules de puissance MP1, MP2, MP3 de façon à être apte à refroidir les modules de puissance MP1, MP2, MP3, comme visible en figure 3 et en figure 4 représentant, en vue de côté et respectivement en vue de face, les éléments de figure 3 assemblés.

La première surface de contact SI est destinée à entourer complètement radialement la machine électrique ME et à être en contact physique avec la machine électrique ME de façon à être apte à refroidir la machine électrique ME, comme visible en figure 4.

Ainsi, comme visible en figure 4, le corps métallique CM est interposé radialement entre la machine électrique ME et les modules de puissance MP1, MP2, MP3.

Il est à noter que, dans la présente demande de brevet, le caractère radial est défini par rapport à l'axe x. L'axe x est perpendiculaire au plan de la figure 4 et parallèle au plan de la figure 3.

Le corps métallique massif CM est délimité, le long de l'axe x, par deux faces transversales ST1 et ST2 dont seule la surface ST1 est visible en figure 1, s'étendant sensiblement perpendiculairement à l'axe x.

La structure de refroidissement CM comprend également un ensemble de canaux de refroidissement CR1, CR2, CR3, CR4 ménagés dans le corps métallique CM, entre la première surface de contact et la deuxième surface de contact, à distance de la première surface de contact SI et de la deuxième surface de contact SE, et dans lesquels est destiné à circuler un liquide de refroidissement.

Ainsi, il y a continuité de matière entre la première surface de contact SI et les canaux de refroidissement CR1, CR2, CR3, CR4 et entre les canaux de refroidissement CR1, CR2, CR3, CR4 et la deuxième surface de contact SE, tout autour de l'axe x.

La structure de refroidissement CM est assimilable à une plaque froide tubulaire.

L'invention permet donc, grâce à une unique structure de refroidissement SR, d'assurer un refroidissement liquide simultané des modules de puissance MP1, MP2, MP3 et de la machine électrique ME. Cette solution, utilisant une structure de refroidissement SR, commune aux modules de puissance MP1, MP2, MP3 et à la machine électrique tournante ME, est peu volumineuse, relativement légère et permet d'assurer un refroidissement performant de ces éléments par un liquide de refroidissement.

Le refroidissement est réalisé par conduction dans le corps métallique massif CM, radialement dans un premier sens, depuis la machine électrique ME vers les canaux CR1, CR2, CR3 et, radialement en sens inverse, depuis les modules de puissance vers les canaux. Le corps CM est refroidi par conduction grâce à la circulation d'un liquide dans les canaux ce qui permet d'améliorer le refroidissement du corps métallique CM massif par conduction. La structure de refroidissement SR entourant complètement l'axe x, permet d'assurer un refroidissement de la machine électrique ME et de modules de puissance MP1, MP2, MP3, par conduction sur 360° autour de l'axe x. Les canaux de refroidissement CR1, CR2, CR3 peuvent également être répartis angulairement tout autour de l'axe x pour assurer le refroidissement du corps métallique massif CM par convection.

La structure de refroidissement SR permet d'évacuer les pertes cuivre, fer et les pertes mécaniques de la machine électrique ME ainsi que les pertes statiques et de commutation des modules de puissance.

Le moyen de refroidissement liquide proposé permet également de garantir une proximité entre la machine électrique ME et sa fonction de pilotage (modules de puissance du variateur VE) ce qui permet de limiter la longueur des liaisons électriques entre ces deux fonctions et donc de réduire le recours au filtrage électromagnétique pour limiter les perturbations électromagnétiques conduites dans ces liaisons et rayonnées par ces liaisons. Cela permet de réduire la masse globale du moto-variateur.

Par ailleurs, le liquide est destiné à circuler entre les surfaces SI et SE à distance de ces surfaces. Cela permet d'assurer une bonne étanchéité de l'assemblage des différents éléments et de proposer une structure métallique présentant une bonne résistance mécanique.

Avantageusement, les canaux de refroidissement CR1, CR2, CR3, CR4 ménagés dans le corps métallique CM sont situés en tout point à distance de la première surface de contact DI et de la deuxième surface de contact SE.

Avantageusement, chaque canal de refroidissement CR1, CR2, CR3, CR4 débouche uniquement sur une face transversale ST1 ou, en variante, sur les deux faces transversales du corps métallique massif CM. Comme visible en figure 4, la machine électrique ME entoure complètement l'axe x de façon radiale et le corps métallique CM entoure complètement l'axe x de façon radiale.

Avantageusement, l'axe I est sensiblement confondu avec l'axe de rotation r.

Le corps métallique CM est, par exemple, réalisé en aluminium, présentant l'avantage d'être léger, ou en acier.

Avantageusement, les modules de puissance MP1, MP2, MP3 sont solidaires du corps massif CM.

La machine électrique ME comprend classiquement un stator et un rotor. Une partie fixe de la machine électrique, c'est-à-dire une partie solidaire du stator de la machine électrique, est avantageusement solidaire du corps métallique CM.

Lorsque les modules de puissance MP1, MP2, MP3 et une partie fixe de la machine électrique ME sont solidaire du corps massif CM, ils forment un objet ou assemblage indépendant susceptible d'être déplacé de façon indépendante et pouvant être installé facilement, par exemple, sur un aéronef.

Avantageusement, le moto-variateur MV forme un objet. A cet effet, les autres éléments du variateur sont, par exemple, fixés à la structure de refroidissement SR.

Avantageusement, pour un refroidissement efficace de la machine électrique ME, la machine électrique ME est en contact physique direct avec le corps massif CM et, plus particulièrement, avec la première surface de contact SI.

Avantageusement, afin d'assurer un refroidissement efficace de la machine électrique ME, la machine électrique ME est en contact physique direct avec la surface SI sur toute la surface SI.

En variante, la machine électrique ME est en contact physique direct avec la premier surface de contact SI sur toute la circonférence de la machine électrique ME autour de l'axe x, dans un plan perpendiculaire à l'axe x et avantageusement sur une portion continue de la longueur de la première surface de contact SI selon l'axe x.

La première surface de contact SI, délimite un tunnel TU.

Avantageusement, le tunnel TU présente une forme sensiblement complémentaire de la machine électrique ME.

Avantageusement, le tunnel TU présente une forme sensiblement complémentaire de la machine électrique ME de façon que la machine électrique ME soit susceptible d'être enfoncée à force dans le tunnel TU.

Afin de favoriser le contact étroit entre la machine électrique ME et le corps métallique CM, la machine électrique ME est avantageusement enfoncée à force dans un tunnel TU.

La machine électrique ME comprend un carter CA entourant radialement et axialement un stator de la machine électrique ME.

Avantageusement, le corps métallique CM est en contact physique direct avec le carter CA.

Le carter CA est un corps métallique. Il est, par exemple, réalisé en acier ou en aluminium.

La machine électrique ME comprend un stator comprenant un empilement de tôles magnétiques et un rotor. Le stator entoure radialement complètement le rotor. Le carter CA délimite une cavité fermée et entoure complètement le rotor et le stator.

Le carter CA comprend, par exemple un palier P, renfermant par exemple un roulement à billes de façon à renfermer axialement un volume à l'intérieur duquel sont insérés le rotor et le stator, ainsi qu'une carcasse tubulaire CARC entourant radialement le rotor et le stator de la machine électrique ME.

En variante à la réalisation des figures, le corps métallique CM est en contact physique direct avec le stator. Autrement dit, le corps métallique CM est en contact physique direct avec une tôle magnétique du stator de la machine électrique ME. Cela permet d'améliorer le refroidissement du stator et du rotor et de limiter la masse du moto-variateur.

Comme visible en figure 2, chaque module de puissance MP1, MP2, MP3 comprend un support S1, S2, S3 supportant un composant de puissance. Le support S1, S2, S3 comprend un socle SO1, SO2, SO3 visible en figure 4 supportant un composant de puissance.

Chaque module de puissance MP1, MP2, MP3 comprend, par exemple, des terminaisons électriques Te.

Dans l'exemple non limitatif de la figure 2, chaque support S1, S2, S3 est un boîtier renfermant au moins un composant de puissance et comprenant un socle SO1, SO2, SO3.

Le support S1, S2, S3 et plus particulièrement le socle SO1, SO2, SO3 est avantageusement en contact physique direct avec le corps massif CM et plus particulièrement avec la deuxième surface de contact SE. Cela permet d'assurer un refroidissement efficace du composant de puissance, chaque module de puissance évacuant des calories par conduction par son socle SO1, SO2, SO3 jusqu'aux canaux de refroidissement respectifs CR1, CR2, CR3, CR4 en passant par le corps massif CM.

En variante, le support est constitué du socle SO1, SO2, SO3 sur lequel est ou sont fixé(s) un ou plusieurs composant(s) de puissance.

En variante, un composant de puissance est en contact physique direct avec le corps massif CM.

Les modules de puissance MP1, MP2, MP3 sont, par exemple, fixés de façon démontable au corps massif CM par des moyens de fixation comme, par exemple, des écrous E visibles en figure 3.

Avantageusement, la deuxième surface de contact SE comprend, comme visible en figures 2 et 4, une ou plusieurs faces planes FP1, FP2, FP3, FP4 et chaque module de puissance MP1, MP2, MP3 comprend une face plane du module P1, P2, P3 en contact physique direct, c'est-à-dire accolée, à une des faces planes FP1, FP2, FP3. Cela permet d'assurer une surface de contacte importante entre le corps métallique CM et les modules de puissance MP1, MP2, MP3 et donc d'assurer un refroidissement efficace des modules de puissances par conduction vers le corps métallique CM.

La face plane P1, P2 ou P3 est, par exemple, une face plane du socle SO1, SO2, SO3.

Avantageusement, pour un refroidissement efficace, la face plane P1, P2, ou P3 est la face plane la plus grande du module de puissance MP1, MP2 ou MP3 considéré. Cela permet de maximiser la surface de contact entre le module de puissance et le corps massif CM.

Avantageusement, la face plane P1, P2, ou P3 du module de puissance est en contact physique direct avec la face plane FP1, FP2, FP3, FP4 du corps massif CM, sur toute la surface de la face plane P1, P2, P3.

Dans l'exemple non limitatif des figures, la deuxième surface de contact SE présente une forme globalement parallélépipédique comprenant quatre faces planes principales FP1, FP2, FP3, FP4 parallèles deux à deux et se faisant face deux à deux.

Dans l'exemple non limitatif des figures, le moto-variateur MV comprend trois modules de puissance MP1, MP2, MP3. Chaque module de puissance MP1, MP2, MP3 est fixé à une des faces planes principales FP1, FP2, FP3. Les modules de puissance respectifs sont fixés sur des faces planes principales respectives différentes. Un module de puissance est fixé sur chaque face plane principale, c'est-à-dire est en regard d'une face plane, par exemple contigu à la face plane.

La forme globalement rectangulaire de la deuxième surface de contact SE, dans un plan perpendiculaire à l'axe x, est dépourvue de sommets. Cette deuxième surface de contact SE comprend des encoches E1, E2, E3, E4, référencées en figure 4, et séparant deux à deux les faces planes FP1, FP2, FP3, FP4. Cela permet d'offrir une plus grande surface d'échange entre l'air environnant et le corps métallique CM. Cela permet également de loger des composants dans le volume délimité par les encoches et limite le volume occupé par le moto-variateur, de façon radiale, au-delà de la surface externe SE.

Des condensateurs ou d'autres composants électroniques C1, C2, C3, représentés en traits pointillés uniquement en figure 4, sont, par exemple, partiellement logés dans les encoches E1, E2, E3 et E4. De préférence, les composants C1, C2, C3 sont, de préférence, disposés à distance de la deuxième surface de contact SE de façon à les protéger de l'échauffement.

Il est à noter que le nombre de faces planes n'est pas limité à celui de l'exemple des figures, ni le nombre de modules de puissance disposé en regard de chaque face plane.

Le fait de prévoir une structure de refroidissement présentant une deuxième surface de contact SE présentant plusieurs faces planes FP1, FP2, FP3, FP4, permet d'assurer un refroidissement efficace d'un nombre élevé de modules de puissance.

Dans les exemples de réalisations décrits ci-dessus, la machine électrique ME est avantageusement en contact physique direct avec la première surface de contact SI et les modules de puissance MP1, MP2, MP3 sont avantageusement en contact physique direct avec la deuxième surface de contact SE.

En variante, la machine électrique ME est séparée de la première surface de contact SI uniquement par une interface thermique et/ou au moins un module de puissance ou composant de puissance est séparé de la deuxième surface de contact SE uniquement par une interface thermique.

Une interface thermique est un matériau d'interface thermique ou TIM (acronyme de l'expression anglo-saxonne « thermal interface material"), comme par exemple, une pâte thermique. Ce type de matériau favorise la conduction de chaleur entre deux éléments accolés à cette interface.

Dans l'exemple non limitatif des figures, la structure de refroidissement SR comprend quatre canaux de refroidissement CR1, CR2, CR3, CR4. En variante, la structure de refroidissement comprend un nombre différent de canaux de refroidissement, par exemple un ou plusieurs canaux de refroidissement.

Chaque canal de refroidissement CR1, CR2, CR3, CR4 est destiné à recevoir un liquide destiné à circuler dans le canal.

Les canaux de refroidissement CR1, CR2, CR3, CR4 sont répartis angulairement autour de l'axe x.

Chaque module de puissance MP1, MP2 ou MP3, fixé à la surface externe SE, est séparé radialement de la machine électrique ME ou de la surface interne SI par un canal de refroidissement CR1, CR2 ou respectivement CR3. Cela permet d'assurer un refroidissement efficace des modules de puissance.

Dans la réalisation avantageuse des figures, comme visible en figure 2, chaque canal CR1, CR2, CR3, CR4, est interposé radialement entre une face plane FP1, FP2, FP3, respectivement FP4 et la première surface de contact SI.

Dans la réalisation avantageuse des figure, comme visible en figure 2, le corps massif CM est monobloc. Les canaux CR1, CR2, CR3, CR4 sont ménagés dans le corps massif monobloc CM.

Chaque canal CR1, CR2, CR3, CR4 se trouve dans un volume globalement parallélépipédique présentant une plus grande face du parallélépipède en regard d'une des face plane FP1, FP2, FP3, FP4 adjacente au canal CR1, CR2, CR3, CR4 considéré.

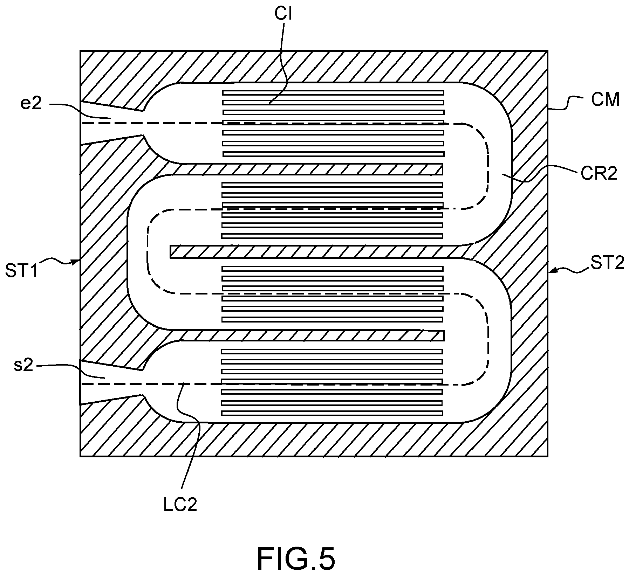

Une vue en coupe de la structure de refroidissement, selon le plan A-A visible en figure 4, dans un plan B transversal (visible en figure 2), est représenté en figure 5. Le canal CR2 loge des cloisons CI perpendiculaires à la face plane FP2, adjacente au canal CR2, et s'étendant longitudinalement selon l'axe x. Ces cloisons CI sont représentées en pointillés en figure 4 car elles ne sont pas visibles depuis l'extérieur du corps monobloc CM. Ces cloisons sont formées par le corps monobloc CM. Les cloisons CI divisent des portions longitudinales du canal CR2 en plusieurs canaux longitudinaux adjacents de façon à permettre d'accélérer le flux de liquide dans le canal de refroidissement CR2. Le canal CR2 comprend, comme chaque autre canal de refroidissement, une entrée e2 par laquelle le liquide est destiné à pénétrer dans le canal et une sortie s2 par laquelle le liquide est destiné à sortir du canal CR2.

Les entrées et sorties des canaux sont reliées à des raccords R2e, R2s, R1s, R4e dont certains sont représentés en pointillés en figure 3. Ces circuits de raccord font partie de circuits de circulation qui seront décrit ultérieurement. Chaque raccord permet de raccorder fluidiquement le canal de refroidissement considéré à d'autres éléments d'un circuit de circulation de fluide dans le canal de refroidissement.

Le corps massif CM est, par exemple, obtenu par usinage d'un bloc de métal parallélépipédique. L'usinage comprend une étape d'usinage du bloc métallique pour former le tunnel, une étape d'usinage pour réaliser les encoches, une étape d'usinage pour former chacun des canaux de refroidissement et une étape pour former les cloisons. Au moins une étape peut, en variante, être réalisée par moulage.

En variante, le corps massif CM est obtenu par fabrication additive (impression 3D). Cette étape est plus rapide que l'usinage. La fabrication additive permet d'obtenir une structure de refroidissement de masse réduite présentant une bonne résistance mécanique.

Le fait que le corps massif CM soit monobloc permet d'obtenir aisément une structure de refroidissement présentant des caractéristiques mécaniques compatibles avec l'obtention d'une structure refroidissement structurelle.

En variante, le corps massif CM comprend un assemblage de plusieurs pièces.

Par exemple, le corps massif CM comprend un corps monobloc délimitant des cavités parallélépipédiques. A l'intérieur de chaque cavité parallélépipédique est inséré un bloc métallique délimitant un des canaux de refroidissement de façon à former le corps massif.

Avantageusement, la structure de refroidissement SR est structurelle. Cela permet d'utiliser la pièce pour relier la machine électrique ME à un équipement dans lequel il est destiné à fonctionner, par exemple à une structure d'un avion. Cela permet d'éviter d'avoir à prévoir une pièce structurelle dédiée ce qui permet d'obtenir un gain de masse. La structure de refroidissement présente ainsi une triple fonction de refroidissement de la machine électrique, de refroidissement de modules de puissance et de support mécanique.

A cet effet, la structure de refroidissement est avantageusement configurée pour présenter une tenue aux chocs, sur chacun des trois axes d'un repère orthogonal, jusqu'à une limite supérieure ou égale à 20 g (g étant l'accélération de la pesanteur à la surface de la terre égale à 9,80665 m·s⁻²) pour une durée de choc minimale de 11 ms. Le repère orthogonal est fixe par rapport à la structure de refroidissement.

Chaque canal de refroidissement CR1, CR2, CR3 ou CR4 suit une ligne courbe moyenne LC2 comme représenté en pointillés en figure 5, par exemple un serpentin, située dans un plan, par exemple, le plan A-A de la figure 5 pour la canal CR2. Autrement dit, le canal de refroidissement CR2 est destiné à faire circuler un liquide de long d'une courbe moyenne située dans un plan A-A et s'étendant depuis une entrée e2 du canal de refroidissement CR2 jusqu'à une sortie s2 du canal de refroidissement CR2.

Ce plan est sensiblement parallèle à la face plane FP1, FP2, FP3, FP4 adjacente au canal de refroidissement CR1, CR2, CR3 ou respectivement CR4 considéré et de laquelle le canal de refroidissement CR1, CR2, CR3 ou respectivement CR4 sépare radialement la machine électrique ME.

Dans le premier mode de réalisation décrit à titre d'exemple non-revendiqué, chaque canal de refroidissement CR1, CR2, CR3, CR4 comprend, comme visible en figure 5, des portions de conduit s'étendant sensiblement linéairement selon l'axe x qui sont reliées par des portions courbes. Les portions linéaires sont sensiblement parallèles entre-elles et sont espacées deux à deux selon un axe du plan comprenant la courbe moyenne formée par le canal et perpendiculaire à l'axe x.

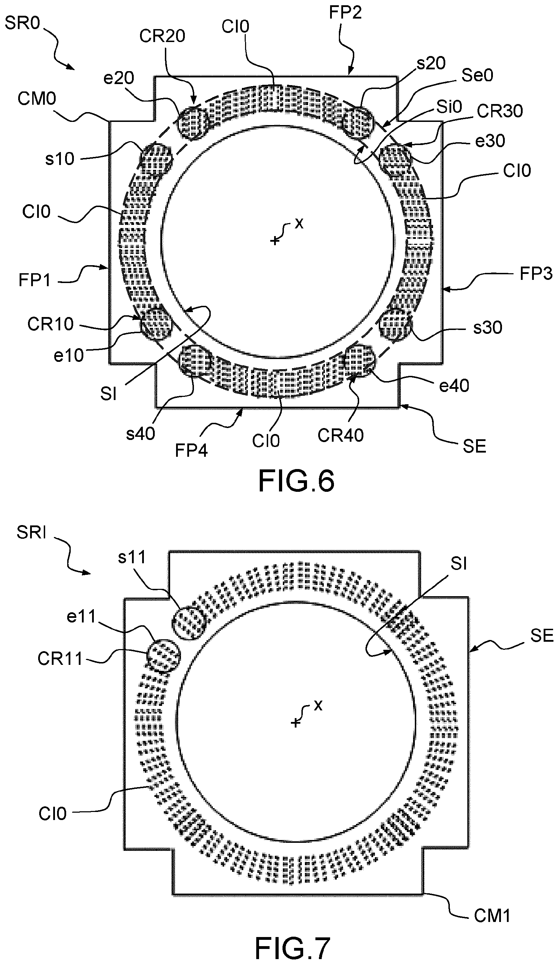

La structure de refroidissement SR0 de la figure 6, est une structure de refroidissement selon l'invention. Elle diffère de la structure selon le premier mode de réalisation, en ce que les canaux de refroidissement CR10, CR20, CR30 et CR40 ménagés dans le corps massif CMC suivent une courbe moyenne comprise dans une portion angulaire d'une surface d'un cylindre circulaire droit d'axe x.

Dans la réalisation non limitative des figures, la première surface de contact SI est sensiblement un cylindre circulaire droit d'axe x.

De façon plus générale, la courbe moyenne suivi par un canal de refroidissement est avantageusement comprise dans une portion angulaire d'une surface d'un cylindre droit d'axe x dont la section, dans chaque plan perpendiculaire à l'axe x, est sensiblement obtenue par homothétie de centre situé sur l'axe x, à partir de la première surface de contact SI. Cette configuration permet de favoriser l'évacuation de la chaleur par la machine électrique ME.

Autrement dit, les canaux de refroidissement CR10, CR20, CR30 CR40 sont situés dans un tube élémentaire tubulaire d'axe x délimité radialement par une surface interne élémentaire Si0 et une surface externe élémentaire Se0 situées entre la première surface de contact SI et la deuxième surface de contact SE et dont les sections, dans chaque plan perpendiculaire à l'axe x, sont sensiblement obtenues par homothétie de centre situé sur l'axe x, à partir de la première surface de contact SI. Chaque conduit élémentaire CR10, CR20, CR30 CR40 loge des cloisons Cl0 représentées en pointillés en figure 6. Chaque canal de refroidissement s'étend depuis une entrée e10, e20, e30, e40 jusqu'à une sortie s10, s20, s30, s40 du canal de refroidissement.

Les canaux de refroidissement présentent des portions allongées selon l'axe x réparties angulairement autour de l'axe x, situées à la même distance de l'axe x et reliées par des parties courbes.

La structure de refroidissement SRI selon un troisième mode de réalisation décrit à titre d'exemple non-revendiqué représentée en figure 7 diffère de celle de la figure 1 en ce qu'elle est comprend un unique canal de refroidissement CR11 ménagé dans le corps massif CM1 s'étendant depuis une entrée e11, jusqu'à une sortie s11.

La forme des canaux n'est pas limitative, la structure de refroidissement peut, par exemple, comprendre un canal enroulé en hélice autour de l'axe x.

Avantageusement, les canaux de refroidissement CR1, CR2, CR3, CR4 sont configurés de façon à pouvoir être reliés en parallèle comme représenté en figure 5. A cet effet, les entrées e1, e2, e3, e4 des différents canaux de refroidissement CR1, CR2, CR3, CR4 sont distinctes et les sorties s1, s2, s3, s4 des différents canaux de refroidissement CR1, CR2, CR3, CR4 sont aussi distinctes.

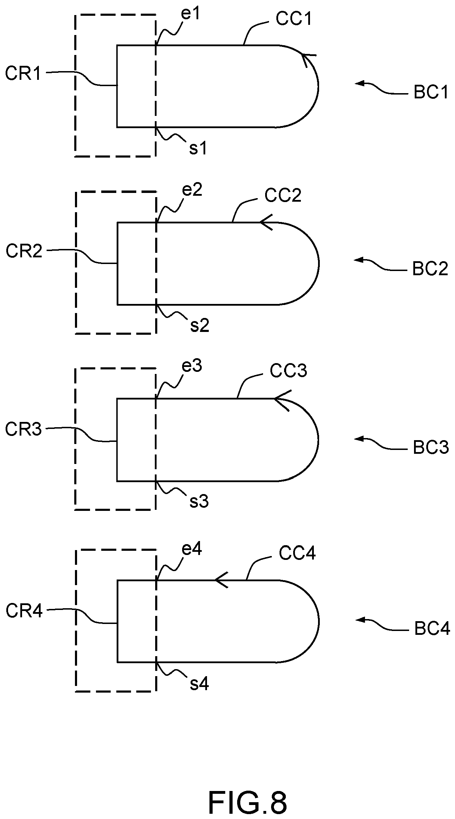

Avantageusement, les canaux de refroidissement CR1, CR2, CR3, CR4 sont reliés en parallèle comme montré en figure 8. Cela permet de limiter la sensibilité des performances du refroidissement à un défaut d'une boucle de refroidissement en assurant une redondance du refroidissement. Cela permet donc de maintenir la disponibilité de la machine électrique même en cas de panne ou de défaut d'une des boucles de circulation (défaut d'une valve, réduction du débit par une fuite ou un canal obturé ...). Cette solution permet également d'obtenir une certaine homogénéité du refroidissement de la machine électrique autour de l'axe x.

A cet effet, le moto-variateur comprend un ensemble de boucles de refroidissement dans lesquelles un liquide est destiné à circuler en boucle fermée. Chaque boucle BC1, BC2, BC3, ou BC4 comprend un des canaux de refroidissement CR1, CR2, CR3, ou CR4 et un circuit de circulation CC1, CC2, CC3, ou respectivement CC4 permettant de faire circuler le liquide dans le canal de refroidissement CR1, CR2, CR3, ou respectivement CR4. Autrement dit, chaque circuit de refroidissement permet d'injecter le liquide en entrée e1, e2, e3, ou e4 du canal de refroidissement considéré CR1, CR2, CR3, ou respectivement CR4 et de le récupérer à sa sortie s1, s2, s3, ou respectivement s4 pour le réinjecter en entrée e1, e2, e3, ou respectivement e4.

Chaque circuit de circulation comprend, par exemple, une pompe et un échangeur thermique.

Le liquide est, par exemple, de l'eau ou de l'huile.

En variante, plusieurs canaux de refroidissement appartiennent à une même boucle de refroidissement. Les performances du refroidissement sont alors plus sensibles à une panne dans une boucle de refroidissement. De plus, le refroidissement peut devenir moins efficace et très inhomogène autour de l'axe x.

Le moto-variateur selon l'invention peut comprendre un boîtier de protection, représenté en traits pointillés en figures 3 et 4, entourant radialement la structure de refroidissement et les modules de puissance fixées à la structure de refroidissement.

## Revendications

1. Structure de refroidissement destinée à refroidir une machine électrique tournante (ME) et un ensemble d'au moins un module électronique de puissance d'un variateur électronique de vitesse permettant de faire varier un signal électrique d'alimentation de la machine électrique tournante (ME) de sorte à faire varier une vitesse de rotation d'un arbre (A) entraînée par la machine électrique (ME) et/ou un couple fourni par la machine électrique (ME), le module électronique de puissance comprenant un composant de puissance, la structure de refroidissement comprenant un corps métallique massif (CM) présentant une forme globalement tubulaire délimitée radialement par une première surface de contact destinée à entourer complètement radialement la machine électrique et à être en contact physique avec la machine électrique et par une deuxième surface de contact entourant radialement complètement la première surface de contact et destinée à être en contact physique avec un premier module de puissance de l'ensemble d'au moins un module de puissance de façon à être apte à refroidir la machine électrique et le module de puissance, la structure de refroidissement comprenant une pluralité de canaux de refroidissement (CR10, CR20, CR30, CR40) ménagés dans le corps métallique massif (CMC), à distance de la première surface de contact et de la deuxième surface de contact, dans lequel est destiné à circuler un liquide de refroidissement, le corps métallique (CM) étant monobloc, chaque canal de refroidissement s'étendant en tout point à distance de la première surface de contact et à distance de la deuxième surface de contact, **caractérisé en ce que** les canaux de refroidissement (CR10, CR20, CR30, CR40) ménagés dans le corps métallique massif (CMC) suivent une courbe moyenne comprise dans une portion angulaire d'une surface d'un cylindre circulaire droit d'axe x, chaque canal de refroidissement (CR10, CR20, CR30 CR40) logeant des cloisons (C10), chaque canal de refroidissement s'étendant depuis une entrée (e10, e20, e30, e40) jusqu'à une sortie (s10, s20, s30, s40) du canal de refroidissement, les canaux de refroidissement (CR10, CR20, CR30, CR40) présentant des portions allongées selon l'axe x du cylindre circulaire droit et réparties angulairement autour dudit l'axe x, situées à la même distance dudit axe x et reliées par des parties courbes.

2. Structure de refroidissement selon l'une quelconque des revendications précédentes, dans laquelle la deuxième surface de contact comprend un ensemble d'au moins une face plane (FP1, FP2, FP3, FP4).

3. Structure de refroidissement selon la revendication précédente, dans laquelle un premier canal de refroidissement des canaux de refroidissement est interposé radialement entre la première face plane et la surface de contact.

4. Structure de refroidissement selon l'une quelconque des revendications précédentes, dans laquelle la deuxième surface de contact présente une forme globalement parallélépipédique.

5. Structure de refroidissement selon l'une quelconque des revendications précédentes, dans laquelle la structure de refroidissement est configurée pour présenter une tenue aux chocs, sur chacun des trois axes d'un repère orthogonal, jusqu'à une limite supérieure ou égale à 20 g pour une durée de choc minimale de 11 ms.

6. Structure de refroidissement selon l'une quelconque des revendications précédentes, dans laquelle les canaux de refroidissement sont configurés de façon à être susceptibles d'être reliés en parallèle.

7. Moto-variateur comprenant une structure de refroidissement selon l'une quelconque des revendications précédentes, la machine électrique tournante (ME) et le variateur électronique de vitesse (VE) et dans lequel la première surface de contact entoure complètement radialement la machine électrique et est en contact physique avec la machine électrique et la deuxième surface de contact est en contact physique avec le premier module de puissance de façon à être apte à refroidir la machine électrique et le module de puissance.

8. Moto-variateur selon la revendication précédente, dans lequel la machine électrique (ME) comprend un rotor, un stator et un carter (CA) entourant le stator et le rotor, le corps métallique (CM) étant en contact physique direct avec le carter.

9. Moto-variateur (MV) selon l'une quelconque des revendications 7 à 8, dans lequel la machine électrique (ME) est enfoncée à force dans un tunnel (TU) délimité par le corps métallique (CM).

## Patentansprüche

1. Kühlstruktur zum Kühlen einer rotierenden elektrischen Maschine (ME) und einer Anordnung von mindestens einem elektronischen Leistungsmodul eines elektronischen Frequenzumrichters, mit dem ein elektrisches Versorgungssignal der rotierenden elektrischen Maschine (ME) so variiert werden kann, dass eine Drehzahl einer von der elektrischen Maschine (ME) angetriebenen Welle (A) und/oder ein von der elektrischen Maschine (ME) bereitgestelltes Drehmoment variiert werden, wobei das elektronische Leistungsmodul eine Leistungskomponente umfasst, wobei die Kühlstruktur einen massiven Metallkörper (CM) umfasst, der eine im Allgemeinen röhrenförmige Form aufweist, die radial durch eine erste Kontaktfläche, die dazu bestimmt ist, die elektrische Maschine vollständig radial zu umgeben und in physischem Kontakt mit der elektrischen Maschine zu stehen, und durch eine zweite Kontaktfläche begrenzt ist, welche die erste Kontaktfläche vollständig radial umgibt und dazu bestimmt ist, in physischem Kontakt mit einem ersten Leistungsmodul der Anordnung von mindestens einem Leistungsmodul zu stehen, sodass sie in der Lage ist, die elektrische Maschine und das Leistungsmodul zu kühlen, wobei die Kühlstruktur eine Vielzahl von Kühlkanälen (CR10, CR20, CR30, CR40) umfasst, die in dem massiven Metallkörper (CMC) in einem Abstand von der ersten Kontaktfläche und der zweiten Kontaktfläche bereitgestellt sind, in denen eine Kühlflüssigkeit zum Zirkulieren bestimmt ist, wobei der Metallkörper (CM) einstückig ist, wobei sich jeder Kühlkanal an jedem Punkt beabstandet von der ersten Kontaktfläche und beabstandet von der zweiten Kontaktfläche erstreckt, **dadurch gekennzeichnet, dass** die Kühlkanäle (CR10, CR20, CR30, CR40), die in dem massiven Metallkörper (CMC) bereitgestellt sind, einer mittleren Kurve folgen, die innerhalb eines Winkelabschnitts einer Oberfläche eines geraden kreisförmigen Zylinders der Achse x liegt, wobei jeder Kühlkanal (CR10, CR20, CR30 CR40) Trennwände (C10) beherbergt, wobei sich jeder Kühlkanal von einem Einlass (e10, e20, e30, e40) zu einem Auslass (s10, s20, s30, s40) des Kühlkanals erstreckt, wobei die Kühlkanäle (CR10, CR20, CR30, CR40) Abschnitte aufweisen, die entlang der Achse x des geraden kreisförmigen Zylinders länglich sind und winkelmäßig um die Achse x verteilt sind, im gleichen Abstand von der Achse x liegen und durch gekrümmte Abschnitte verbunden sind.

2. Kühlstruktur nach einem der vorhergehenden Ansprüche, wobei die zweite Kontaktfläche einen Satz von mindestens einer ebenen Fläche (FP1, FP2, FP3, FP4) umfasst.

3. Kühlstruktur nach dem vorhergehenden Anspruch, wobei ein erster Kühlkanal der Kühlkanäle radial zwischen der ersten ebenen Fläche und der Kontaktfläche eingesetzt ist.

4. Kühlstruktur nach einem der vorhergehenden Ansprüche, wobei die zweite Kontaktfläche eine im Allgemeinen parallelepipedartige Form aufweist.

5. Kühlstruktur nach einem der vorhergehenden Ansprüche, wobei die Kühlstruktur so konfiguriert ist, dass sie in jeder der drei Achsen eines orthogonalen Bezugssystems eine Stoßfestigkeit bis zu einer Obergrenze von 20 g oder mehr über eine minimale Stoßdauer von 11 ms aufweist.

6. Kühlstruktur nach einem der vorhergehenden Ansprüche, wobei die Kühlkanäle so konfiguriert sind, dass sie parallel verbunden werden können.

7. Gangwechselantrieb, umfassend eine Kühlstruktur nach einem der vorhergehenden Ansprüche, die rotierende elektrische Maschine (ME) und den elektronischen Frequenzumrichter (VE) und wobei die erste Kontaktfläche die elektrische Maschine vollständig radial umgibt und in physischem Kontakt mit der elektrischen Maschine steht und die zweite Kontaktfläche in physischem Kontakt mit dem ersten Leistungsmodul steht, sodass sie in der Lage ist, die elektrische Maschine und das Leistungsmodul zu kühlen.

8. Gangwechselantrieb nach dem vorhergehenden Anspruch, wobei die elektrische Maschine (ME) einen Rotor, einen Stator und ein Gehäuse (CA) umfasst, das den Stator und den Rotor umgibt, wobei der Metallkörper (CM) in direktem physischem Kontakt mit dem Gehäuse steht.

9. Gangwechselantrieb (MV) nach einem der Ansprüche 7 bis 8, wobei die elektrische Maschine (ME) in einen Tunnel (TU) hineingezwungen wird, der von dem Metallkörper (CM) begrenzt wird.

## Claims

1. A cooling structure intended to cool a rotating electrical machine (ME) and a set of at least one electronic power module of an electronic variable speed drive making it possible to vary an electrical power supply signal of the rotating electrical machine (ME) so as to vary a rotation speed of a shaft (A) driven by the electrical machine (ME) and/or a torque provided by the electrical machine (ME), the electronic power module comprising a power component, the cooling structure comprising a solid metal body (CM) having an overall tubular shape delimited radially by a first contact surface intended to completely radially surround the electrical machine and to be in physical contact with the electrical machine and by a second contact surface completely radially surrounding the first contact surface and intended to be in physical contact with a first power module of the set of at least one power module so as to be able to cool the electrical machine and the power module, the cooling structure comprising a plurality of cooling channels (CR10, CR20, CR30, CR40) provided in the solid metal body (CM0), at a distance from the first contact surface and from the second contact surface, in which a coolant is intended to circulate, the metal body (CM) being made of a single piece, each cooling channel extending at all points at a distance from the first contact surface and at a distance from the second contact surface, **characterised in that** the cooling channels (CR10, CR20, CR30, CR40) provided in the solid metal body (CMC) follow a median curve comprised in an angular portion of a surface of a straight circular cylinder of axis x, each cooling channel (CR10, CR20, CR30, CR40) housing partitions (C10), each cooling channel extending from an input (e10, e20, e30, e40) to an output (s10, s20, s30, s40) of the cooling channel, the cooling channels (CR10, CR20, CR30, CR40) having elongate portions along the axis x of the straight circular cylinder and distributed angularly about said axis x, located at the same distance from said axis x and linked by curved parts.

2. The cooling structure according to any one of the preceding claims, wherein the second contact surface comprises a set of at least one planar face (FP1, FP2, FP3, FP4).

3. The cooling structure according to the preceding claim, wherein a first cooling channel of the cooling channels is interposed radially between the first planar face and the contact surface.

4. The cooling structure according to any one of the preceding claims, wherein the second contact surface has an overall parallelepipedal shape.

5. The cooling structure according to any one of the preceding claims, wherein the cooling structure is configured to exhibit an impact resistance, on each of the three axes of an orthogonal reference frame, up to a limit greater than or equal to 20 g for a minimum impact duration of 11 ms.

6. The cooling structure according to any one of the preceding claims, wherein the cooling channels are configured so as to be able to be linked in parallel.

7. A speed change drive unit comprising a cooling structure according to any one of the preceding claims, the rotating electrical machine (ME) and the electronic variable speed drive (VE) and wherein the first contact surface completely radially surrounds the electrical machine and is in physical contact with the electrical machine and the second contact surface is in physical contact with the first power module so as to be able to cool the electrical machine and the power module.

8. The speed change drive unit according to the preceding claim, wherein the electrical machine (ME) comprises a rotor, a stator and a casing (CA) surrounding the stator and the rotor, the metallic body (CM) being in direct physical contact with the casing.

9. The speed change drive unit (MV) according to any one of claims 7 and 8, wherein the electrical machine (ME) is forced-fitted in a tunnel (TU) delimited by the metallic body (CM).
